# DEMANDE DE BREVET EUROPEEN

(11) **EP 1 316 358 A1**
(43) Date de publication de la demande: **04.06.2003**
(21) Numéro de dépôt: 01403099.3
(22) Date de dépôt: 03.12.2001
(51) Int. Cl.: B01J 29/06, B01J 23/10, B01D 53/94, B01D 53/86

(54) **Composition à base d'une ferrierite et son utilisation dans un procédé pour la réduction des émissions des oxydes d'azote**

(71) Demandeur: Rhodia Electronics and Catalysis, 17041 La Rochelle Cedex (FR); ATOFINA Research, 7181 Seneffe (Feluy) (BE); Peugeot Citroen Automobiles SA, 92200 Neuilly sur Seine (FR); Universite Libre de Bruxelles, 1050 Bruxelles (BE)
(72) Inventeur: La désignation de l'inventeur n'a pas encore été déposée
(74) Mandataire: Dubruc, Philippe

(57) **Abrégé**

L' invention concerne une composition qui est caractérisée en ce qu'elle est à base d'oxyde de cérium et d'une ferriérite échangée avec une terre rare choisie parmi le cérium, le praséodyme, le samarium, le terbium, l'europium et l'ytterbium. Cette composition peut comprendre en outre de l'oxyde de zirconium. Elle peut être utilisée dans un procédé de traitement de gaz pour la réduction des émissions des oxydes d'azote, comme des gaz de chaudières de centrales thermiques ou des gaz d'échappement de moteurs fonctionnant en mélange pauvre comme des moteurs diesel ou essence.

## Description

La présente invention concerne une composition à base d'une ferriérite et son utilisation dans un procédé de traitement de gaz pour la réduction des émissions des oxydes d'azote.

On sait qu'à la suite de la mise en place de réglementations de plus en plus contraignantes, les émissions de polluants atmosphériques, notamment des oxydes d'azote (NOx), vont devoir être réduites de manière significative dans les prochaines années.

Les centrales thermiques notamment et les moteurs d'automobiles tout particulièrement émettent des gaz contenant des oxydes d'azote. Dans le cas de ces moteurs, la réduction des NOx des gaz d'échappement est effectuée à l'aide de catalyseurs "trois voies" qui utilisent stoechiométriquement les gaz réducteurs présents dans le mélange. Tout excès d'oxygène se traduit par une détérioration brutale des performances du catalyseur. Or, certains moteurs comme les moteurs diesel ou les moteurs essence fonctionnant en mélange pauvre (lean burn) sont économes en carburant mais émettent des gaz d'échappement qui contiennent en permanence un large excès d'oxygène d'au moins 2% par exemple. Un catalyseur trois voies standard est donc sans effet sur les émissions en NOx de ces moteurs.

Il existe donc un besoin réel de catalyseurs efficaces pour le traitement de gaz contenant des NOx. Par ailleurs, le problème se pose de disposer de catalyseurs qui soient actifs à basses températures et/ou sur une large gamme de températures.

Dans ce but, l'invention concerne une composition qui est caractérisée en ce qu'elle est à base d'oxyde de cérium et d'une ferriérite échangée avec une terre rare choisie parmi le cérium, le praséodyme, le samarium, le terbium, l'europium et l'ytterbium.

L'invention concerne aussi un procédé de traitement de gaz pour la réduction des émissions des oxydes d'azote, qui est caractérisé en ce qu'on utilise à titre de catalyseur la composition précitée.

D'autres caractéristiques, détails et avantages de l'invention apparaîtront encore plus complètement à la lecture de la description qui va suivre, ainsi que des divers exemples concrets mais non limitatifs destinés à l'illustrer.

L'invention concerne tout d'abord une nouvelle composition. Cette composition est à base d'une ferriérite.

La ferriérite (FER) est une zéolithe connue qui peut être naturelle ou synthétique. Il s'agit d'un silicate complexe de silicium et d'aluminium, de structure cristalline orthorhombique et dont les paramètres de maille sont généralement a=19,2Å, b=14,1Å, c=7,5Å, ces valeurs n'étant données qu'à titre illustratif. Elle peut être représentée notamment par la formule NH₄[(AlₓSi₃₆₋ₓO₇₂], cette formule n'étant donnée qu'à titre indicatif dans la mesure notamment où le rapport SiO₂/Al₂O₃ peut varier dans de très larges proportions, la ferriérite pouvant être à base de silicium seul (x=0) et ce rapport SiO₂/Al₂O₃ pouvant atteindre la valeur de 90 par exemple, cette valeur n'étant pas limitative. Les différentes ferriérites peuvent comprendre d'autres cations échangeables du type magnésium, sodium, potassium ou calcium par exemple. Une autre forme envisageable de la ferriérite est la forme acide dans laquelle l'hydrogène remplace les cations précités ou le cation ammonium. Cette ferriérite sous forme acide peut être obtenue par calcination d'une ferriérite de type NH₄[(AlₓSi₃₆₋ₓO₇₂]. En outre, le silicium de la ferriérite peut être en partie substitué, par exemple par du gallium, du strontium ou du fer.

La ferriérite qui est utilisée dans la composition de l'invention est échangée avec une terre rare choisie parmi le cérium, le praséodyme, le samarium, le terbium, l'europium et l'ytterbium. Par "échangée", on entend, d'une manière classique, que les ions échangeables de la ferriérite (ammonium, sodium, et/ou calcium par exemple) ou encore hydrogène pour la ferriérite acide, ont été au moins partiellement remplacés ou substitués par la terre rare précitée.

Selon un mode de réalisation préféré de l'invention, la terre rare est le cérium.

La ferriérite peut être totalement échangée avec la terre rare précitée. Le taux d'échange avec la terre rare peut être toutefois plus particulièrement compris entre 15 et 95%, notamment entre 30 et 95%.

Dans la présente description, le taux d'échange est défini comme étant le rapport 3[TR]/[AI] exprimé en pour-cent, les concentrations en terre rare [TR] et en aluminium [AI] étant déterminées par analyse ICPMS et exprimées en mole/l.

La ferriérite échangée peut être préparée par des méthodes connues. Par exemple, on forme une solution ou une suspension aqueuse d'une ferriérite naturelle ou synthétique et on ajoute à cette solution ou suspension un sel de la terre rare soluble dans l'eau ou un sol de cette terre rare. Ce sel peut être par exemple un nitrate ou un acétate. La quantité de sel introduite est fonction du taux d'échange que l'on désire obtenir. On laisse réagir le sel et la ferriérite, puis on filtre, on lave et on sèche éventuellement, et on calcine ce par quoi obtient ainsi la ferriérite échangée. Il faut noter que la réaction entre le sel ou le sol et la ferriérite peut se faire en chauffant le milieu réactionel et sous reflux, par exemple à une température comprise entre 70°C et 99°C, plus particulièrement entre 95°C et 99°C.

Il est aussi possible de préparer la ferriérite échangée par réaction solide/solide. On mélange ainsi un sel de la terre rare avec une ferriérite et on chauffe à une température de 600°C par exemple.

La ferriérite peut aussi être préparée in situ. Dans ce cas, on forme un mélange qui comprend un substrat sur lequel va être formé la ferriérite. Ce substrat peut être par exemple un monolithe métallique ou en céramique. Le mélange comprend en outre une source de silicium, une source d'aluminium et un agent directeur de structure qui peut être choisi par exemple parmi la pyrolidine, la pyridine, la pipéridine, l'éthylène-diamine. Ce mélange est ensuite chauffé dans un autoclave. On forme ainsi une ferriérite. On peut ensuite procéder à l'échange en opérant comme décrit précédemment

La composition de l'invention comprend en outre de l'oxyde de cérium. Cet oxyde de cérium est de préférence un oxyde à surface spécifique stabilisée, c'est à dire susceptible de présenter une surface de valeur élevée même après calcination à température Importante. On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

A titre d'exemple, on peut utiliser comme constituant de la composition de l'invention les oxydes de cérium décrits dans les demandes de brevet EP-A-153227, EP-A-239478, EP-A-275733 et qui présentent généralement des surfaces spécifiques d'au moins 100m²/g, plus particulièrement d'au moins 130m²/g après calcination à une température comprise entre 400°C et 500°C. Ces oxydes sont obtenus par hydrolyse d'une solution d'un sel de cérium 4⁺ en milieu acide et lavage avec un solvant organique (EP-A-153227), par déstabilisation par une base d'un sol de cérium acide (EP-A-239478) ou par traitement thermique d'un hydroxyde de cérium préparé par réaction d'un sel de cérium et d'une base forte en présence d'ions carboxylates ou par réaction d'une base forte et d'un carboxylate de cérium.

On peut aussi mentionner les oxydes de cérium qui font l'objet de la demande de brevet EP-A-300852 dont la surface spécifique est d'au moins 15m²/g après calcination à une température comprise entre 800°C et 900°C. Ces oxydes sont obtenus par autoclavage d'un hydroxyde cérique préparé par réaction d'une solution d'un sel de cérium et d'une base. On peut encore citer les oxydes de cérium décrits dans la demande de brevet EP-A-388567 qui présentent aussi une surface spécifique d'au moins 15m²/g après calcination à une température comprise entre 800°C et 900°C mais dont en outre la surface spécifique après calcination entre 350°C et 450°C est d'au moins 190m²/g. Ces oxydes sont obtenus par autoclavage d'un hydroxyde cérique préparé par thermohydrolyse d'une solution d'un sel de cérium IV en milieu basique.

Selon une variante de l'invention, les compositions de l'invention peuvent contenir, outre la ferriérite et l'oxyde de cérium, de l'oxyde de zirconium.

On utilise là aussi de préférence un oxyde de zirconium à surface spécifique stabilisée.

Dans le cas d'une composition selon cette variante, c'est à dire à base d'oxyde de cérium et d'oxyde de zirconium, on peut utiliser ces oxydes sous forme séparée mais aussi sous la forme d'un seul oxyde (oxyde mixte), les oxydes de cérium et de zirconium étant présents ainsi sous forme d'un mélange intime. Plus particulièrement encore, on peut utiliser un oxyde mixte dans lequel le zirconium est en solution solide dans l'oxyde de cérium. Dans ce cas, les diagrammes de diffraction X de l'oxyde mixte révèlent au sein de ce dernier l'existence d'une seule phase homogène. Cette phase correspond en fait à celle d'un oxyde cérique CeO₂ cubique cristallisé et dont les paramètres de mailles varient par rapport à un oxyde cérique pur, traduisant ainsi l'incorporation du zirconium dans le réseau cristallin de l'oxyde de cérium, et donc l'obtention d'une solution solide vraie.

On pourra utiliser plus particulièrement les oxydes sous forme séparée ou mixte dans des quantités telles que le rapport massique oxyde de cérium/oxyde de zirconium est compris entre 1/9 et 9/1. Préférentiellement, on utilise des oxydes dans lequel l'oxyde de cérium est majoritaire par exemple en une proportion d'oxyde de cérium d'au moins 60% par rapport à l'ensemble oxyde de cérium/oxyde de zirconium.

A titre d'exemple, on peut utiliser un oxyde à base d'oxyde de cérium stabilisé par de l'oxyde de zirconium et tel que décrit dans la demande de brevet EP-A-207857 et pouvant présenter une surface spécifique stable jusqu'à 10m²/g à 900°C. Cet oxyde est obtenu par imprégnation d'un oxyde de cérium par un sel de zirconium suivie d'une calcination.

On peut mentionner aussi les produits à base d'oxyde de cérium et d'oxyde de zirconium décrits dans les demande de brevets EP-A-605274. Dans ce cas, ces produits sont des solutions solides du zirconium dans l'oxyde de cérium et ils présentent une surface spécifique d'au moins 30m²/g après calcination 6 heures à 800°C. Ces produits sont obtenus par thermohydrolyse d'un mélange de sels de cérium et de zirconium. On peut aussi utiliser les oxydes mixtes décrits dans la demande de brevet EP-A-735984. Ces oxydes présentent un volume poreux total d'au moins 0,6 cm³/g dont au moins 40% sont apportés par des pores de diamètre d'au plus 1µm. Ces oxydes ont une surface spécifique d'au moins 40m²/g après calcination 6 heures à 800°C. Ils sont obtenus par précipitation de sels de cérium et de zirconium en présence d'un carbonate ou d'un bicarbonate.

Conviennent aussi les produits décrits dans la demande de brevet WO 97/43214 à base d'oxyde de cérium et d'oxyde de zirconium dans une proportion atomique cérium/ zirconium d'au moins 1 et qui présentent une surface spécifique après calcination 6 h. à 900°C d'au moins 35 m²/g ainsi qu'une capacité de stockage de l'oxygène à 400°C d'au moins 1,5 ml d'O₂/g. La préparation de ces produits se fait par thermohydrolyse d'un mélange en milieu liquide de composés de cérium et de zirconium, en utilisant une solution de zirconium telle que la quantité de base nécessaire pour atteindre le point équivalent lors d'un dosage acide-base de cette solution vérifie la condition rapport molaire OH/Zr d'au plus 1,65.

On peut aussi utiliser dans le cadre de la présente invention un oxyde mixte de zirconium et de cérium du type décrit dans la demande de brevet européen EP-A- 863846 dans lequel le cérium est présent en solution solide dans l'oxyde de zirconium. Dans ce cas, les spectres en diffraction RX de cet oxyde révèlent l'existence d'une phase unique clairement identifiable et correspondant à celle d'un oxyde de zirconium cristallisé dans le système cubique ou quadratique, traduisant ainsi l'incorporation du cérium dans le réseau cristallin de l'oxyde de zirconium. Cet oxyde mixte présente une surface spécifique d'au moins 30m²/g après calcination 6 heures à 900°C et, selon un mode particulier de réalisation un rapport Zr/Ce égal ou supérieur à 1. Cet oxyde mixte est obtenu par un procédé dans lequel on chauffe à une température supérieure à 100°C un mélange en milieu liquide contenant un composé du zirconium et un composé du cérium IV et où on amène le milieu réactionnel obtenu à l'issue du chauffage à un pH basique.

Selon une autre variante de l'invention, les compositions peuvent contenir, outre la ferriérite et l'oxyde de cérium, un oxyde d'une terre rare autre que le cérium. Par terre rare on entend les éléments du groupe constitué par l'yttrium et les éléments de la classification périodique de numéro atomique compris inclusivement entre 57 et 71. Comme terre rare on peut citer plus particulièrement le lanthane, le praséodyme, le néodyme et le gadolinium. Dans le cadre de cette dernière variante, les compositions de l'invention peuvent bien entendu comprendre, outre la ferriérite, trois oxydes en combinaison : un oxyde de cérium, un oxyde de zirconium et un oxyde de terre rare.

On pourra se référer à ce sujet à la demande de brevet EP-A-207857 mentionnée plus haut qui décrit des oxydes de cérium comprenant en outre un oxyde de terre rare ainsi qu'à la demande de brevet WO 97/43214 mentionnée précédemment qui décrit aussi des compositions ternaires d'oxydes de cérium, de zirconium et d'une terre rare.

Toutes les proportions respectives des constituants de la composition de l'invention (ferriérite, oxyde de cérium, éventuellement oxyde de zirconium et/ou oxyde de terre rare) peuvent être envisagées. Cependant, la proportion en masse de ferriérite peut être comprise plus particulièrement entre 20% et 80% par rapport à l'ensemble de la composition.

On peut mentionner plus particulièrement le cas des compositions qui comprennent de l'oxyde de cérium et de l'oxyde de zirconium, dont la proportion en masse de ferriérite est comprise entre 40 et 60%, la ferriérite présentant un taux d'échange avec le cérium compris entre 70 et 95%. Dans ce cas, les compositions présentent généralement, lorsqu'elles sont utilisées au traitement de gaz contenant des oxydes d'azote, un effet d'élimination élevé de ces oxydes sur une plage de température large.

Comme autre mode de réalisation particulier, on peut aussi mentionner les compositions qui comprennent de l'oxyde de cérium et de l'oxyde de zirconium, dont la proportion en masse de ferriérite est comprise entre 20 et 30%, la ferriérite présentant un taux d'échange avec le cérium compris entre 50 et 70%. Ces compositions présentent un début d'activité à des températures basses, vers 190°C environ et un taux maximum de conversion des NOx qui se situe dans des températures basses, vers 300°C environ.

Les compositions de l'invention à base de la ferriérite échangée et d'un oxyde de cérium et en outre éventuellement d'un oxyde de zirconium et/ou d'un oxyde de terre rare peuvent être préparées par mélange physique de la ferriérite et du ou des oxydes.

Les compositions telles que décrites ci-dessus peuvent être utilisées comme catalyseur ou support de catalyseurs.

Elles peuvent être utilisées tout particulièrement au traitement de gaz pouvant comprendre des oxydes d'azote en combinaison éventuellement avec des oxydes de carbone et/ou des hydrocarbures, en vue de la réduction des émissions des oxydes d'azote.

L'invention concerne donc aussi un procédé de traitement de gaz pour la réduction des émissions des oxydes d'azote, qui est caractérisé en ce qu'on utilise à titre de catalyseur ces compositions. Selon un mode de réalisation particulier de l'invention, le procédé est mis en oeuvre avec un catalyseur qui comprend en outre une ferriérite échangée avec du platine. Plus précisément, le procédé peut être mis en oeuvre en utilisant un premier catalyseur disposé en amont par rapport au sens d'écoulement du gaz à traiter et qui comprend une composition telle que décrite plus haut et un second catalyseur comprenant la ferriérite échangée avec du platine. On notera que les définitions données plus haut pour la ferriérite échangée avec une terre rare s'appliquent aussi à cette ferriérite échangée avec du platine. Dans le cas de ce mode de réalisation, la proportion en poids entre les deux catalyseurs peut être quelconque. De préférence, cette proportion peut être voisine de 1 ou égale à 1. Ce mode de réalisation particulier présente l'avantage d'avoir une activité significative à une température assez basse et sur une gamme de température étendue.

Les gaz susceptibles d'être traités par la présente invention sont, par exemple, des effluents d'unités industrielles comme des ateliers de synthèse d'acide nitrique ou adipique ou les gaz issus d'unité d'incinération. Les gaz peuvent être aussi ceux issus d'installations stationnaires du type turbines à gaz ou chaudières de centrales thermiques ou encore les gas issus de moteurs à combustion interne. Dans ce dernier cas, il peut s'agir notamment de moteurs fonctionnant en mélange pauvre, plus particulièrement de moteurs diesel ou de moteurs essence. Il s'agit aussi dans ce cas de gaz présentant une teneur élevée en oxygène. On entend ici des gaz présentant un excès d'oxygène par rapport à la quantité nécessaire pour la combustion stoechiométrique des carburants et, plus précisément, des gaz présentant en permanence un excès d'oxygène par rapport à la valeur stoechiométrique λ = 1. La valeur λ est corrélée au rapport air/carburant d'une manière connue en soi notamment dans le domaine des moteurs à combustion interne. La teneur en oxygène, exprimée en volume de ces gaz, est généralement d'au moins 2%, notamment d'au moins 5%, plus particulièrement d'au moins 10%, cette teneur pouvant par exemple se situer entre 5 et 20%.

Les gaz peuvent contenir des hydrocarbures et, dans un tel cas, une des réactions que l'on cherche à catalyser est la réaction HC (hydrocarbures) + NO_{X}.

Les hydrocarbures qui peuvent être utilisés comme agent réducteur pour l'élimination des NOx sont notamment les gaz ou les liquides des familles des hydrocarbures saturés, des hydrocarbures comprenant des liaisons éthyléniques ou acétyléniques, des hydrocarbures aromatiques et les hydrocarbures des coupes pétrolières comme par exemple le méthane, l'éthane, le propane, le butane, le pentane, l'hexane, l'éthylène, le propylène, l'acétylène, le butadiène, le benzène, le toluène, le xylène, le kérosène, le gaz oil et les essences.

Les gaz peuvent contenir aussi comme agent réducteur, des composés organiques contenant de l'oxygène. Ces composés peuvent être notamment les alcools du type par exemple alcools saturés comme le méthanol, l'éthanol ou le propanol; les éthers comme l'éther méthylique ou l'éther éthylique; les esters comme l'acétate de méthyle et les cétones.

L'invention s'applique aussi au traitement de gaz ne contenant pas d'hydrocarbures ni de composés organiques comme agent réducteur.

On notera que les catalyseurs de l'invention comprenant une composition à base de ferriérite échangée et d'oxyde de cérium conviennent plus particulièrement au traitement des gaz d'échappement issus d'installations stationnaires, de moteurs de poids-lourds ou d'autocars et de moteurs essence lean-burn de voitures de tourisme. Les catalyseurs comprenant une composition à base de ferriérite échangée et d'oxyde de cérium et d'oxyde de zirconium conviennent plus particulièrement au traitement des gaz d'échappement issus de moteurs diesel de voitures de tourisme, notamment les moteurs à injection directe à rampe commune d'injection.

L'invention concerne aussi un système catalytique pour le traitement de gaz en vue de la réduction des émissions des oxydes d'azote. Ce système est caractérisé en ce qu'il comprend une composition selon l'invention et telle que décrite plus haut.

Selon un mode de réalisation particulier de l'invention, ce système comprend une composition selon l'invention et telle que décrite plus haut et une ferriérite échangée avec du platine. Plus particulièrement, la composition précitée est disposée en amont par rapport au sens d'écoulement du gaz à traiter et la ferriérite est disposée en aval. Ce sytème a l'avantage de présenter une activité sur une gamme de température étendue.

Dans ce système, la composition peut se présenter sous diverses formes telles que granulés, billes, cylindres ou nid d'abeille de dimensions variables. La composition peut être appliquée sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

La composition peut aussi être utilisées dans des systèmes catalytiques comprenant un revêtement (wash coat) constitué par, ou comprenant cette ferriérite ou cette composition, le revêtement étant disposé sur un substrat du type par exemple monolithe métallique ou en céramique. Le revêtement peut comporter lui aussi un support du type de ceux mentionnés plus haut. Ce revêtement est obtenu par mise en suspension de la composition, éventuellement en mélange avec un support du type précité, suspension qui peut être ensuite déposée sur le substrat.

Les systèmes sont montés d'une manière connue dans les pots d'échappement des véhicules dans le cas de l'application au traitement des gaz d'échappement.

Des exemples vont maintenant être donnés.

Les produits suivants ont été utilisés :
- CeO₂ HSA5® de Rhodia de surface de 128m²/g calciné 2 heures à 600°C
- oxyde mixte de cérium et de zirconium de Rhodia de surface de 88m²/g calciné 2 heures à 700°C à teneur massique en oxydes CeO₂/ZrO₂ de 70%/30% respectivement.
- oxyde ternaire de cérium, de zirconium et de lanthane de Rhodia à teneur massique en oxydes CeO₂/ZrO₂/La₂O₃ de 53%/27%/20%, de surface de 88m²/g après calcination à 750°C.
- NH₄-Ferrierite ZSM-35 Zeolyst/Shell de rapport Si/Al 11,7
- acétate de cérium Sigma-Aldrich à 99,9%
- ferriérite échangée. Cette ferriérite a été préparée de la manière suivante.
   10 à 20 grammes de NH₄-Ferrierite sont échangés avec 1000 ml d'une solution d'acétate de cérium de 0,01 à 0,01 M dans de l'eau déminéralisée sur une durée de 5 heures à 90°C. Selon le taux d'échange d'ion désiré, cet échange est répété avec 1000 autres ml d'une solution fraîchement préparée d'acétate de cérium. Pour un taux d'échange de 80 à 90 %, la procédure d'échange doit être effectuée 3 fois. Après l'échange, la zéolithe est soigneusement lavée avec au moins 5 litres d'eau déminéralisée, séchée pendant une nuit à 120°C et calcinée de 500 à 600°C pendant 6 heures. La vitesse de montée en température pendant la calcination est de 5°C/min, la vitesse de refroidissement est de 10°C/min.
- ferriérite échangée avec de l'argent. Cette ferriérite échangée a été préparée selon la méthode décrite ci-dessus. On est parti de la zéolithe ZSM-35 mentionnée plus haut et en utilisant une solution de nitrate d'argent (0,06M). L'échange s'est fait à température ambiante en 2 heures, le taux d'échange est de 28%.
- ferriérite échangée avec du platine. Cette ferriérite échangée a été préparée selon la méthode décrite ci-dessus. On est parti de 17g de la zéolithe ZSM-35 mentionnée plus haut et en utilisant 1 litre d'une solution 0,035M de Pt(NH₃)₄(OH)₂ dans de l'eau déminéralisée pendant 24 heures à température ambiante. La quantité de platine dans la ferriérite est de 0,4% en poids déterminée par analyse ICP-OES.
- zéolithe H-ZSM-5 échangée avec du cérium. Cette zéolithe a été échangée avec du cérium à un taux de 15% selon la méthode décrite ci-dessus.

Le mélange gazeux traité dans les exemples 1 et 2 est le suivant :
NOx : 400 ppm vol.
O₂:10% vol.
C₃H₆: 400 ppm vol.
H₂O : 10% vol.
N₂ : complément à 100%
VVH : 42.000h⁻¹

Le catalyseur est utilisé dans un réacteur tubulaire sous forme d'une poudre de 500µm à 800µm et dans une quantité de 2g et le débit de gaz est de 2l/min.

### EXEMPLE 1

On utilise dans cet exemple une ferriérite dont le taux d'échange avec le cérium est de 72% qui est mélangée à différentes quantités d'oxyde de cérium. On donne ci-dessous les produits préparés.

| Produit | Proportions massiques ferriérite/CeO₂ |
|---|---|
| 1-1 | 50/50 |
| 1-2 | 40/60 |
| 1-3 | 33/67 |
| 1-4 (produit comparatif) | 0/100 |

On traite avec les produits ci-dessus le mélange gazeux décrit plus haut. Les résultats sont donnés dans la tableau 1 qui suit.

**Tableau 1**

| Produit | CM NOx | TCM | Gamme de température (CNOx>50%) |
|---|---|---|---|
| 1-1 | 100% | 300°C | 220-390°C |
| 1-2 | 100% | 250°C | 180-420°C |
| 1-3 | 100% | 250°C | 190-370°C |
| 1-4 (produit comparatif) | 13% | 400°C | |
| CM NOx : indique le taux de conversion des NOx maximum obtenu | | | |
| TCM : indique la température à laquelle on obtient le taux de conversion des NOx maximum | | | |
| Gamme de température (CNOx>50%) : indique la gamme de températures entre lesquelles le produit permet d'obtenir un taux de conversion des NOx supérieur à 50%. | | | |

### EXEMPLE 2

On utilise dans cet exemple une ferriérite dont le taux d'échange avec le cérium est de 93% et qui est mélangée avec l'oxyde de cérium dans une proportion massique 50/50.

On traite avec ce produit le mélange gazeux décrit plus haut. Les résultats sont donnés dans la tableau 2 qui suit.

**Tableau 2**

| Produit | CM NOx | TCM | Gamme de température (CNOx>50%) |
|---|---|---|---|
| 2-1 | 100% | 300°C | 220-470°C |

Pour les exemples qui suivent le mélange gazeux traité avec les compositions est le suivant :
NOx : 400 ppm vol.
O₂:10% vol.
C₃H₆ : 400 ppm vol.
H₂O : 3,5% vol.
He : complément à 100%
VVH : 42.000h⁻¹

Le catalyseur est utilisé dans un réacteur tubulaire sous forme d'une poudre de granulométrie inférieure à 250µm et dans une quantité de 0,3ml et le débit de gaz est de 210ml/min.

### EXEMPLE 3

Cet exemple illustre l'utilisation d'une ferriérite en combinaison avec de l'oxyde de cérium, de l'oxyde de zirconium et de l'oxyde de lanthane.

La ferriérite utilisée présente un taux d'échange avec le cérium de 60% et elle est mélangée à différentes quantités de l'oxyde ternaire de cérium, de zirconium et de lanthane mentionné plus haut. On donne ci-dessous les produits préparés.

| Produit | Proportions massiques ferriérite/(CeO₂ + ZrO₂ + La₂O₃) |
|---|---|
| 3-1 | 75/25 |
| 3-2 | 50/50 |
| 3-3 | 25/75 |
| 3-4 (produit comparatif) | 0/100 |

On traite avec les produits ci-dessus le mélange gazeux décrit plus haut,. Les résultats sont donnés dans le tableau 4 qui suit.

**Tableau 3**

| Produit | CM NOx | TCM | Gamme de température (CNOx>50%) |
|---|---|---|---|
| 3-1 | 95% | 310°C | 190-390°C |
| 3-2 | 93% | 335°C | 230-395°C |
| 3-3 | 84% | 330°C | 260-400°C |
| 3-4 (produit comparatif) | 68% | 210°C | 175-260°C |

### EXEMPLE 4

Cet exemple illustre l'utilisation d'une ferriérite en combinaison avec de l'oxyde de cérium, de l'oxyde de zirconium et de l'oxyde de lanthane.

La ferriérite utilisée présente un taux d'échange avec le cérium de 95% et elle est mélangée à différentes quantités de l'oxyde ternaire de cérium, de zirconium et de lanthane mentionné plus haut. On donne ci-dessous les produits préparés.

| Produit | Proportions massiques ferriérite/(CeO₂ + ZrO₂ + La₂O₃) |
|---|---|
| 4-1 | 50/50 |
| 4-2 | 25/75 |

On traite avec les produits ci-dessus le mélange gazeux décrit plus haut. Les résultats sont donnés dans le tableau 4 qui suit.

**Tableau 4**

| Produit | CM NOx | TCM | Gamme de température (CNOx>50%) |
|---|---|---|---|
| 4-1 | 89% | 330°C | 220-445°C |
| 4-2 | 84% | 340°C | 250-430°C |

### EXEMPLE 5

Cet exemple illustre l'utilisation d'une ferriérite en combinaison avec un oxyde mixte de cérium et de zirconium.

La ferriérite utilisée présente un taux d'échange avec le cérium de 60% et elle est mélangée avec l'oxyde mixte décrit plus haut dans la proportion massique suivante ferriérite 25%, oxyde mixte 75%.

Les résultats du traitement de gaz sont donnés dans la tableau 5 qui suit.

**Tableau 5**

| Produit | CM NOx | TCM | Gamme de température (CNOx>50%) |
|---|---|---|---|
| 5 | 84% | 320°C | 230-390°C |

Il apparaît des exemples ci-dessus que les catalyseurs de l'invention sont actifs jusqu'à des températures aussi basses que 180°C et sur une gamme de températures qui peut être large, de l'ordre de 200°C.

### EXEMPLE 6 COMPARATIF

On traite le même mélange gazeux que celui de l'exemple 1 avec la ferriérite échangée avec de l'argent (produit 6-1) et la zéolithe ZSM-5 échangée avec du cérium (produit 6-2) décrites plus haut. Les résultats sont donnés dans la tableau 6 qui suit.

**Tableau 6**

| Produit | CM NOx | TCM |
|---|---|---|
| 6-1 | 35% | 375°C |
| 6-2 | 30% | 350°C |

On voit que les produits de cet exemple ne permettent pas d'obtenir un taux de conversion des NOx supérieur à 50%.

## Revendications

1. Composition, **caractérisée en ce qu'**elle est à base d'oxyde de cérium et d'une ferriérite échangée avec une terre rare choisie parmi le cérium, le praséodyme, le samarium, le terbium, l'europium et l'ytterbium.

2. Composition selon la revendication 1, **caractérisée en ce que** la ferriérite présente un taux d'échange avec la terre rare précitée est compris entre 15 et 95%, plus particulièrement entre 30 et 95%.

3. Composition selon la revendication 1 ou 2, **caractérisée en ce que** la terre rare précitée est le cérium.

4. Composition selon l'une des revendications précédentes, **caractérisée en ce qu'**elle comprend en outre de l'oxyde de zirconium.

5. Composition selon l'une des revendications précédentes, **caractérisée en ce qu'**elle comprend en outre un oxyde de terre rare.

6. Composition selon l'une des revendications précédentes, **caractérisée en ce que** la proportion en masse de ferriérite est comprise entre 20% et 80%.

7. Composition selon l'une des revendications 4 à 6, **caractérisée en ce qu'**elle comprend de l'oxyde de cérium et de l'oxyde de zirconium et **en ce que** la proportion en masse de ferriérite est comprise entre 40 et 60%, la ferriérite présentant un taux d'échange avec le cérium compris entre 70 et 95%.

8. Composition selon l'une des revendications 4 à 6, **caractérisée en ce qu'**elle comprend de l'oxyde de cérium et de l'oxyde de zirconium et **en ce que** la proportion en masse de ferriérite est comprise entre 20 et 30%, la ferriérite présentant un taux d'échange avec le cérium compris entre 50 et 70%.

9. Composition selon l'une des revendications 4 à 8, **caractérisée en ce qu'**elle comprend de l'oxyde de cérium et de l'oxyde de zirconium, le zirconium étant en solution solide dans l'oxyde de cérium.

10. Procédé de traitement de gaz pour la réduction des émissions des oxydes d'azote, **caractérisé en ce qu'**on utilise à titre de catalyseur une composition selon l'une des revendications 1 à 9.

11. Procédé selon la revendication 10 caractérisée en qu'on utilise un catalyseur qui comprend en outre une ferriérite échangée avec du platine.

12. Procédé selon la revendication 11, **caractérisé en ce qu'**on utilise un premier catalyseur comprenant une composition selon l'une des revendications 1 à 9 et un second catalyseur comprenant une ferriérite échangée avec du platine, le premier catalyseur étant disposé en amont du second par rapport au sens d'écoulement des gaz traités.

13. Procédé selon l'une des revendications 10 à 12, **caractérisé en ce qu'**on traite un gaz d'échappement de moteurs fonctionnant en mélange pauvre, notamment de moteurs diesel ou de moteurs essence.

14. Procédé selon la revendication 13, **caractérisé en ce qu'**on traite un gaz d'échappement de moteurs à injection directe à rampe commune d'injection et **en ce que** la composition précitée est à base de la ferriérite échangée, d'oxyde de cérium et d'oxyde de zirconium

15. Système catalytique pour la mise en oeuvre d'un procédé de traitement de gaz pour la réduction des émissions des oxydes d'azote, **caractérisé en ce qu'**il comprend une composition selon l'une des revendications 1 à 9.

16. Système selon la revendication 15, **caractérisé en ce qu'**il comprend une composition selon l'une des revendications 1 à 9 et une ferriérite échangée avec du platine.

17. Système selon la revendication 16, **caractérisé en ce que** la composition précitée est disposée en amont de la ferriérite échangée avec du platine par rapport au sens d'écoulement des gaz traités.
